# EUROPEAN PATENT APPLICATION

(11) **EP 3 401 746 A1**
(43) Date of publication of application: **14.11.2018**
(21) Application number: 18156820.5
(22) Date of filing: 14.02.2018
(51) Int. Cl.: G05B 19/05, G05B 19/414

(54) **SUPPORT DEVICE, CONTROL METHOD OF SUPPORT DEVICE, AND NON-TRANSITORY COMPUTER-READABLE RECORDING MEDIUM**

(30) Priority: 12.05.2017 JP 2017095736
(71) Applicant: OMRON CORPORATION, Kyoto-shi, Kyoto 600-8530 (JP)
(72) Inventor: SHIGEMORI, Yutsuka, Kyoto-shi, Kyoto 600-8530 (JP)
(74) Representative: 2K Patentanwälte Blasberg Kewitz & Reichel

(57) **Abstract**

A support device (10) that supports creation of a user program which is executed by an industrial control device (20), a control method of the support device (10) and a non-transitory computer-readable recording medium are provided. According thereto, overall programs including a sequence program and an NC program can be easily understood. In an embodiment, a tool (10) includes a display control unit (120) that displays a sequence program and an NC program which are to be synchronously executed on a single screen in an editable manner.

## Description

### BACKGROUND

### Technical Field

The disclosure relates to a support device and the like that supports creation of a user program which is executed in an industrial control device, a control method of the support device and a non-transitory computer-readable recording medium.

### Description of Related Art

In the related art, a development support device that supports development of a control system using an industrial control device such as a programmable logic controller (hereinafter abbreviated to "PLC") is known. For example, Patent Document 1 described below discloses a disclosure for efficiently building a sequence program which is executed in a sequence control device such as a programmable logic controller (PLC) and a numerical control (NC) program which is executed in a numerical control device.

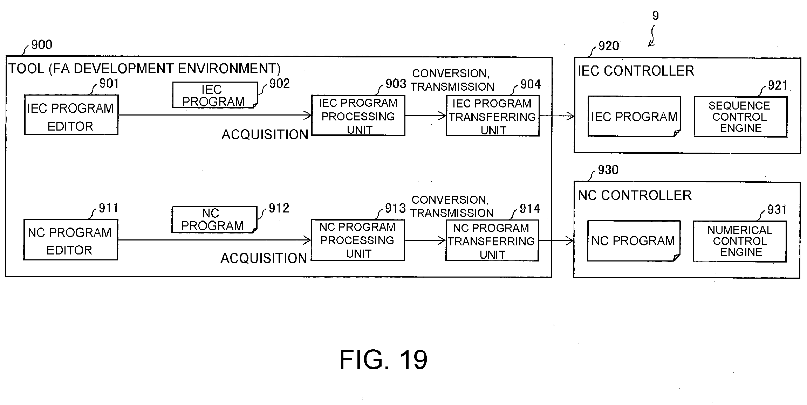

FIG. 19 is a diagram illustrating an entire outline of a development system 9 according to the related art including the disclosure described in Patent Document 1 or the like. As illustrated in FIG. 19, the development system 9 according to the related art includes an IEC controller 920 which is a sequence control device such as a PLC, an NC controller 930 which is a numerical control device, and a tool 900 that provides a factory automation (FA) development environment. The IEC controller 920 includes a sequence control engine 921 that performs sequence control by executing an IEC program (that is, a sequence program). The NC controller 930 includes a numerical control engine 931 that performs numerical control by executing an NC program. In other words, in the development system 9 according to the related art, an IEC program and an NC program are executed by different controllers, that is, by the IEC controller 920 and the NC controller 930. An IEC program refers to a sequence program based on International Electrotechnical Commission (IEC) 61131-3.

The tool 900 is a functional unit that creates, edits, compiles, and transmits an IEC program which is executed by the IEC controller 920 and includes an IEC program editor 901, an IEC program processing unit 903, and an IEC program transferring unit 904. The IEC program editor 901 provides a function of allowing a user to create and edit an IEC program 902 as source code. The IEC program processing unit 903 compiles the IEC program 902 which has been created and edited by a user. The IEC program transferring unit 904 transmits the IEC program 902 which has been compiled by the IEC program processing unit 903 to the IEC controller 920.

The tool 900 is a functional unit that creates, edits, compiles, and transmits an NC program which is executed by the NC controller 930 and includes an NC program editor 911, an NC program processing unit 913, and an NC program transferring unit 914. The NC program editor 911 provides a function of allowing a user to create and edit an NC program 912 as source code. The NC program processing unit 913 compiles the NC program 912 which has been created and edited by a user. The NC program transferring unit 914 transmits the NC program 912 which has been compiled by the NC program processing unit 913 to the NC controller 930.

As illustrated in FIG. 19, in the tool 900, the function of allowing a user to create and edit an IEC program 902 and an NC program 912 is divided into the IEC program editor 901 and the NC program editor 911. In other words, the IEC program 902 and the NC program 912 are created and edited by different editors, that is, are created and edited by the IEC program editor 901 and the NC program editor 911. In the tool 900, the IEC program 902 and the NC program 912 are transmitted to different controllers, that is, the IEC controller 920 and the NC controller 930.

[Patent Document 1] Japanese Laid-open No. 2000-99117 (published on April 7, 2000)

### SUMMARY

As illustrated in FIG. 19, in the tool 900 in the development system 9 according to the related art, the function of allowing a user to create and edit an IEC program 902 and an NC program 912 is divided into the IEC program editor 901 and the NC program editor 911.

Accordingly, in the related art, there is a problem in that a user cannot simultaneously confirm a sequence program (an IEC program) and an NC program on the same screen, where the sequence program and the NC program have to be synchronously executed. In other words, in the related art, there is a problem in that it is difficult for a user to clearly see all programs (user programs) including a sequence program and an NC program and thus a user's programming efficiency decreases.

An aspect of the disclosure is to provide a program development environment or the like that can allow a user to easily understand a whole user program including a sequence program and an NC program and improve a user's programming efficiency.

According to an embodiment of the disclosure, there is provided a support device that supports creation of a user program which is executed by an industrial control device, the support device including: a reception unit that receives a programming operation of a user, where the programming operation is associated with a sequence program and an NC program which are to be synchronously executed; and a display control unit that displays the sequence program and the NC program as the user program on a single screen in an editable manner in accordance with the programming operation received by the reception unit.

According to this configuration, the support device displays the sequence program and the NC program, which have to be synchronously executed, on a single screen in an editable manner.

Accordingly, the support device can enable a user to easily understand the entire user program including the sequence program and the NC program and can improve a user's programming efficiency. The user can create and edit the sequence program and the NC program on a single screen using the support device, that is, can efficiently build the user program including the sequence program and the NC program using the support device.

The support device according to the disclosure may further include a program processing unit. When building the user program displayed by the display control unit, the program processing unit (A) unloads the NC program in the user program and (B) inserts a function block with an identifier corresponding to the unloaded NC program into a position at which the unloaded NC program was located in the user program, where the function block is a function block for calling the unloaded NC program.

According to this configuration, when the user program including the sequence program and the NC program which are to be synchronously executed is built, the support device (A) unloads the NC program in the user program and (B) inserts a function block with an identifier corresponding to the unloaded NC program into a position at which the unloaded NC program was located in the user program, where the inserted function block is a function block for calling the unloaded NC program. That is, the user program into which the function block for calling the unloaded NC program has been inserted does not include the NC program and includes only the sequence program.

Accordingly, the support device can cause an "editor according to the related art that can process only a sequence program" to process the "user program into which the function block for calling the unloaded NC program has been inserted." In other words, the support device can use the configuration of the editor according to the related art to process the "user program into which the function block for calling the unloaded NC program has been inserted."

Accordingly, the support device can process the "user program from which the NC program has been unloaded and into which the function block (FB) for calling the NC program has been inserted instead" using the configuration of the "editor according to the related art that can process only a sequence program." In other words, the support device can use the configuration of the editor according to the related art to process the "user program from which the NC program has been unloaded and into which the FB for calling the NC program has been inserted instead." For example, the support device can perform processing such as building the "user program from which the NC program has been unloaded and into which the function block FB for calling the NC program has been inserted instead" and transmitting the built program to the industrial control device.

Accordingly, the support device can use the configuration of the "editor according to the related art that can process only a sequence program" and curb costs for implementing the support device.

Accordingly, the support device can process the "NC program which has been unloaded from the user program" using the configuration of the "editor according to the related art that can process only an NC program." In other words, the support device can use the configuration of the editor according to the related art to process the "NC program which has been unloaded from the user program." For example, the support device can perform processing such as building the "NC program which has been unloaded from the user program" and transmitting the built program to the industrial control device.

Accordingly, the support device can use the configuration of the "editor according to the related art that can process only an NC program" and curb costs for implementing the support device.

In the support device according to the disclosure, the display control unit may display the sequence program and the NC program with information for distinguishing the NC program from the sequence program on a single screen in an editable manner.

According to this configuration, the support device displays the sequence program and the NC program with information for distinguishing the NC program from the sequence program on a single screen in an editable manner.

Accordingly, the support device can enable a user to "easily distinguish the sequence program and the NC program from the user program displayed in an editable manner on the single screen."

According to this configuration, the support device can easily distinguish the sequence program and the NC program in the user program on the basis of the "information for distinguishing the NC program from the sequence program."

In the support device according to the disclosure, the display control unit may display an area in which the NC program is editable in the sequence program which is programmed by at least one of a ladder diagram and a function block diagram.

According to this configuration, the support device displays an area in which the NC program is editable in the sequence program which is programmed by at least one of a ladder diagram (LD) and a function block diagram (FBD).

Here, the LD and the FBD are program languages which are generally used for the sequence program and are program languages to which a user is accustomed.

Accordingly, the support device can provide a user with an environment in which the NC program can be programmed in the sequence program while the sequence program is programmed using the LD and the FBD.

In the support device according to the disclosure, the display control unit may display pragmas indicating start and end of the NC program in the sequence program which is programmed by a structured text and may display the NC program between the displayed pragmas indicating the start and the end in an editable manner.

According to this configuration, the support device displays pragmas indicating start and end of the NC program in the sequence program which is programmed by structured text (ST) and displays the NC program between the displayed pragmas indicating the start and the end in an editable manner.

Here, the ST is a program language which is generally used for the sequence program and is a program language to which a user is accustomed.

Accordingly, the support device can provide a user with an environment in which the NC program can be programmed in the sequence program while the sequence program is programmed using the ST.

In the support device according to the disclosure, the display control unit may display an action with an attribute indicating the NC program in the sequence program which is programmed by a sequential function chart in an editable manner, where the action includes the NC program.

According to this configuration, the support device displays an action with an attribute indicating the NC program in the sequence program which is programmed by a sequential function chart (SFC) in an editable manner, where the action includes the NC program.

Here, the SFC is a program language which is generally used for the sequence program and is a program language to which a user is accustomed.

Accordingly, the support device can provide a user with an environment in which the NC program can be programmed into the sequence program while the sequence program is programmed using the SFC.

The support device according to the disclosure may further include a program transferring unit that transmits the sequence program and the NC program to a single industrial control device that synchronously executes the sequence program and the NC program.

According to this configuration, the support device transmits the sequence program and the NC program to a single industrial control device that synchronously executes the sequence program and the NC program.

Accordingly, the support device can enable a single industrial control device to synchronously execute the sequence program and the NC program which are programmed using the support device by a user.

In the support device according to the disclosure, the display control unit may display the NC program of the user program in a list.

According to this configuration, the support device displays the NC program of the user program in a list.

Accordingly, for example, when a plurality of NC programs are scattered in the single user program, the support device can display the plurality of NC programs scattered in the user program in a list to improve readability.

In the support device according to the disclosure, the display control unit may enlarge and display, in an editable manner, the NC program in the user program on a screen other than a screen on which the user program is displayed in an editable manner.

According to this configuration, the support device enlarges and displays, in an editable manner, the NC program of the user program on a screen other than a screen on which the user program is displayed in an editable manner. That is, the support device can enlarge and display the NC program which is being programmed in the user program in another editor view.

According to this configuration, the support device can provide an environment that can prevent readability of the NC program from deteriorating and enable a user to efficiently program the NC program.

In the support device according to the disclosure, the display control unit may display (A) at least one of a program name and content of the NC program in the user program and (B) at least one of a program name of the user program or the sequence program and identification information of a function block that calls the NC program in correlation with each other.

According to this configuration, the support device displays (A) at least one of a program name and content of the NC program in the user program and (B) at least one of a program name of the user program or the sequence program and identification information of a function block that calls the NC program in correlation with each other.

Accordingly, for example, when a plurality of NC programs are scattered in a plurality of user programs, the support device can enable a user to easily confirm the user programs or the sequence programs in which the plurality of NC programs are present.

According to another embodiment of the disclosure, there is provided a control method of a support device that supports creation of a user program which is executed by an industrial control device, the support method including: a reception step of receiving a programming operation of a user, where the programming operation is associated with a sequence program and an NC program which are to be synchronously executed; and a display control step of displaying the sequence program and the NC program as the user program on a single screen in an editable manner in accordance with the programming operation received in the reception step.

According to this method, the support device displays the sequence program and the NC program, which have to be synchronously executed, on a single screen in an editable manner.

Accordingly, the control method can enable a user to easily understand the entire user program including the sequence program and the NC program and can improve a user's programming efficiency. The user can create and edit the sequence program and the NC program on a single screen using an editor (a programming support device) that performs the control method. That is, a user can efficiently build the user program including the sequence program and the NC program using the editor that performs the control method.

According to the embodiments of the disclosure, it is possible to allow a user to easily understand a whole user program including a sequence program and an NC program and to improve a user's programming efficiency.

### BRIEF DESCRIPTION OF THE DRAWINGS

FIG. 1 is a block diagram illustrating a principal configuration of a tool according to a first embodiment of the disclosure;
FIG. 2 is a diagram illustrating an entire outline of a development system including the tool illustrated in FIG. 1;
FIG. 3(A), FIG. 3(B), and FIG. 3(C) are diagrams illustrating an example of a data structure of elements constituting a user program in the tool illustrated in FIG. 1;
FIG. 4(A), FIG. 4(B), and FIG. 4(C) are diagrams illustrating an example of correlation management information, an NC program that is a replacement source and an FB (NC call) that is a replacement destination;
FIG. 5 is a diagram illustrating an example in which an NC program is created and edited in an LD program or an FBD program;
FIG. 6 is a diagram illustrating an example in which an NC program is created and edited in an ST program;
FIG. 7 is a diagram illustrating an example in which an NC program is created and edited in an SFC program;
FIG. 8 is a flowchart schematically illustrating a process routine which is performed for an LD program including an NC program by the tool illustrated in FIG. 1;
FIG. 9 is a flowchart schematically illustrating a process routine which is performed for an ST program including an NC program by the tool illustrated in FIG. 1;
FIG. 10 is a flowchart schematically illustrating a process routine which is performed for an SFC program including an NC program by the tool illustrated in FIG. 1;
FIG. 11 is a flowchart schematically illustrating a process routine which is performed by the tool illustrated in FIG. 1 after the process routines illustrated in FIGs. 8 to 10;
FIG. 12 is a diagram illustrating an example in which an NC program in a user program is replaced with an "FB (NC call)";
FIG. 13 is a diagram schematically illustrating an "NC program list displaying function" of the tool illustrated in FIG. 1;
FIG. 14 is a flowchart illustrating an example of a process routine of the "NC program list displaying function" performed by the tool illustrated in FIG. 1;
FIG. 15 is a diagram schematically illustrating an "NC program enlargement displaying function" of the tool illustrated in FIG. 1;
FIG. 16 is a flowchart illustrating an example of a process routine of the "NC program enlargement displaying function" performed by the tool illustrated in FIG. 1;
FIG. 17 is a diagram schematically illustrating an "IEC-NC program table displaying function" of the tool illustrated in FIG. 1;
FIG. 18 is a flowchart illustrating an example of a process routine of the "IEC-NC program table displaying function" performed by the tool illustrated in FIG. 1; and
FIG. 19 is a diagram illustrating an entire outline of a development system according to the related art.

### DESCRIPTION OF THE EMBODIMENTS

### [First embodiment]

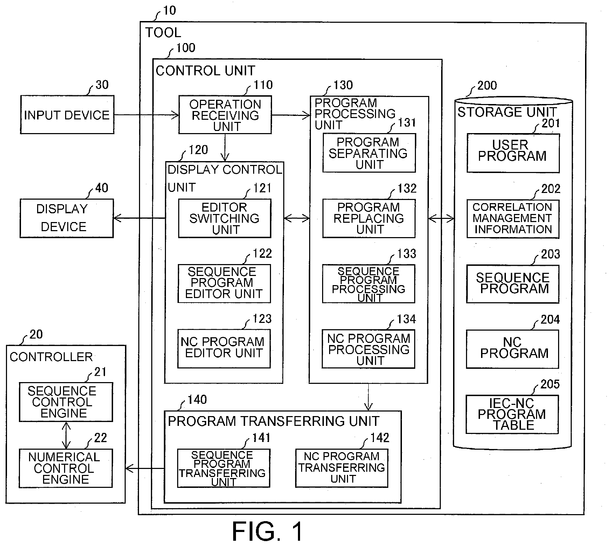

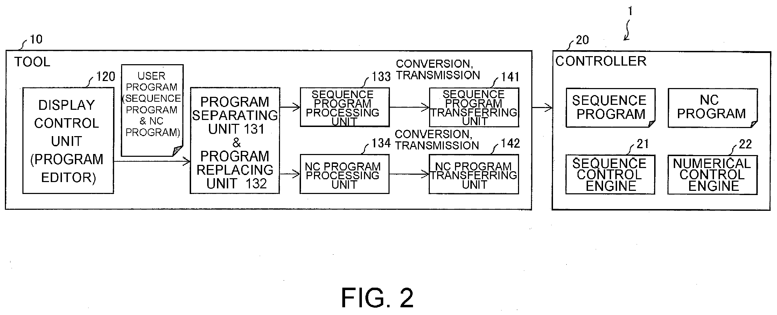

Hereinafter, a first embodiment of the disclosure will be described in detail with reference to FIGs. 1 to 18. The same or corresponding elements in the drawings will be referenced by the same reference signs and description thereof will not be repeated. In order to facilitate understanding of a tool 10 according to an embodiment of the disclosure, the outline of a development system 1 including the tool 10 will be first described with reference to FIG. 2.

The tool 10 is a programming support device that provides an environment for programming a user program as a control program which a user causes a controller 20 to execute depending on a purpose of control (for example, target lines and processes). The tool 10 may be called an editor or programming editor. A user program that is programmed by a user in the programming support environment which is provided by the tool 10 includes a sequence program and a numerical control (NC) program.

In the following description, an example in which a user incorporates an NC program into a sequence program in the programming support environment which is provided by the tool 10 will be described. That is, a user program which will be described below is a user program in which an NC program is programmed in a sequence program.

However, a user may incorporate a sequence program into an NC program using the tool 10. That is, the tool 10 can display a sequence program and an NC program in a single screen in an editable manner. The tool 10 may provide an area for editing an NC program in a screen for editing a sequence program or may provide an area for editing a sequence program in a screen for editing an NC program. The tool 10 can provide a development environment which can be easily used by a user who mainly programs a sequence program by providing an area for editing an NC program in a screen for editing a sequence program. The tool 10 can also provide a development environment which can be used by a user who mainly programs an NC program by providing an area for editing a sequence program in a screen for editing an NC program.

In the following description, a "sequence program" is, for example, a sequence program based on International Electrotechnical Commission (IEC) 61131-3 and may be referred to as an "IEC program." An "NC program" is executed by a numerical control device such as an NC machine tool and may be referred to as a "computer numerical control (CNC) program," a "numerically controlled machining program," a "numerical control program," or a "machining program."

### (Outline of development system)

FIG. 2 is a diagram illustrating an entire outline of a development system 1 including the tool 10. The development system 1 illustrated in FIG. 2 includes a tool 10 that provides a comprehensive development environment for numerical control and sequence control and a controller 20 that synchronously performs numerical control and sequence control by executing a program which is created and edited using the tool 10.

The controller 20 is a control device that can synchronously execute a sequence program and an NC program and includes a sequence control engine 21 and a numerical control engine 22. In other words, sequence control which is performed by causing the sequence control engine 21 to execute a sequence program and numerical control which is performed by causing the numerical control engine 22 to execute an NC program are unified in the single controller 20.

As illustrated in FIG. 19, in the development system 9 according to the related art, an IEC program and an NC program are executed by different controllers. That is, in the development system 9 according to the related art illustrated in FIG. 19, an IEC program and an NC program are executed by different controllers and thus are processed by different tools. In order to unify development environments for an IEC program and an NC program, it is first necessary to unify the controllers that execute the IEC program and the NC program.

On the other hand, in the development system 1 illustrated in FIG. 2, a sequence program and an NC program are executed by the sequence control engine 21 and a numerical control engine 22 which cooperate in the controller 20.

The tool 10 creates a user program and setting information, where the user program is executed in the controller 20. In other words, the tool 10 is a device that provides a development environment of the controller 20 and is a device that provides an environment for allowing a user to create (create and edit) a user program depending on a purpose of control (for example, target lines and processes). A user creates program code of a control program (a user program) which is executed in the controller 20 using the development environment (a programming tool) which is provided by the tool 10. The tool 10 may have a debugging function and a simulation function to support a user's creation and edition of the control program which is executed in the controller 20. The tool 10 may monitor an operating state, various data values, and the like of the controller 20 and may be a simulator of the controller 20. That is, the tool 10 may be a device that provides a unified development environment supporting a 3D motion simulator in addition to a programming function, a configuration (configuration setting) function, a debugging function, a maintenance function, and a monitoring function of the controller 20.

The tool 10 implements the functions using a personal computer that executes a program (an execution processing program) stored in a DVD-ROM or the like which is not illustrated. The tool 10 may be configured to implement the functions using a personal computer that downloads a program such as a program stored in the DVD-ROM from a higher host computer or the like via a network and executes the downloaded program.

As illustrated in FIG. 2, the tool 10 provides a development environment that can allow a user to create and edit user programs including a sequence program and an NC program. The tool 10 provides an area into which an NC program can be programmed, for example, in an editing screen for a sequence program. The tool 10 compiles the edited sequence program and the edited NC program which are created and edited by a user and transmits the compiled programs to the controller 20.

As illustrated in FIG. 19, in the development system 9 according to the related art, an IEC program 902 and an NC program 912 are developed, that is, created and edited, by the IEC program editor 901 and the NC program editor 911. In the tool 900 of the development system 9 according to the related art, the IEC program 902 and the NC program 912 are not explicitly called, but are called by system settings. That is, in the tool 900, a screen for programming an IEC program 902 and a screen for programming an NC program 912 are different screens, and both programs cannot be programmed on the same screen. Accordingly, there is a problem in that a user (=developer) cannot clearly see the user programs including the IEC program editor 901 and the NC program editor 911 at the same time.

In the development system 1 illustrated in FIG. 2, the tool 10 provides, for example, an environment that can allow "a user to embed an NC program in a sequence program and perform programming." In other words, the tool 10 provides an environment in which a sequence program and an NC program can be integrated and programmed. In the programming environment which is provided by the tool 10, a user can perform programming of a sequence program and programming of an NC program on the same screen.

Accordingly, by using the tool 10, a user can program a sequence program and an NC program without jumping between a plurality of screens and easily understand linkage between the sequence program and the NC program. By using the tool 10, a user does not need to perform a user operation other than programming, such as a GUI, and can focus on the programming at the time of programming the sequence program and the NC program, thereby causing enhancement in development efficiency.

### (Outline of tool)

The outlines of the development system 1 and the devices (the tool 10 and the controller 20) included in the development system 1 have been described with reference to FIG. 2 hitherto. The configuration and process details of the tool 10 included in the development system 1 will be described below with reference to FIG. 1 or the like. Before details of the tool 10 will be described with reference to FIG. 1, the outline of the tool 10 will be summarized as follows to facilitate understanding of the tool 10.

The tool 10 (a support device) is a support device that supports creation of a user program which is executed by the controller 20 (an industrial control device) and includes an operation receiving unit 110 (a reception unit) that receives a user's programming operation associated with a sequence program and an NC program which are to be synchronously executed; and a display control unit 120 that displays the sequence program and the NC program as the user program on a single screen in an editable manner in accordance with the programming operation received by the operation receiving unit 110.

According to this configuration, the tool 10 displays the sequence program and the NC program, which have to be synchronously executed, on a single screen in an editable manner. Specifically, the tool 10 displays the sequence program and the NC program, which has to be synchronously executed, on a single screen of a display device 40 in an editable manner.

Accordingly, the tool 10 can enable a user to easily understand the entire user program including the sequence program and the NC program and can improve a user's programming efficiency. The user can create and edit the sequence program and the NC program on a single screen using the tool 10, that is, can efficiently build the user program including the sequence program and the NC program.

The tool 10 may further include a program processing unit 130. When building the user program displayed by the display control unit 120, the program processing unit 130 (A) unloads the NC program in the user program and (B) inserts a function block (FB) with an identifier corresponding to the unloaded NC program into a position at which the unloaded NC program was located in the user program, where the inserted FB is an FB for calling the unloaded NC program.

According to this configuration, when the user program including the sequence program and the NC program which are to be synchronously executed is built, the tool 10 (A) unloads the NC program in the user program and (B) inserts a FB, with an identifier corresponding to the unloaded NC program and for calling the unloaded NC program, into a position at which the unloaded NC program was located in the user program. That is, the user program into which the FB for calling the unloaded NC program has been inserted does not include the NC program and includes only the sequence program.

Accordingly, the tool 10 can process the "user program from which the NC program has been unloaded and into which the FB for calling the NC program has been inserted instead" using an "editor according to the related art that can process only a sequence program." In other words, the tool 10 can use the configuration of the editor according to the related art to process the "user program from which the NC program has been unloaded and into which the FB for calling the NC program has been inserted instead." For example, the tool 10 can perform processing such as building the "user program from which the NC program has been unloaded and into which the FB for calling the NC program has been inserted instead" and transmitting the built program to the industrial control device.

Accordingly, the tool 10 can use the configuration of the "editor according to the related art that can process only a sequence program" and curb costs for implementing the tool 10.

Accordingly, the tool 10 can process the "NC program which has been unloaded from the user program" using the configuration of the "editor according to the related art that can process only an NC program." In other words, the tool 10 can use the configuration of the editor according to the related art to process the "NC program which has been unloaded from the user program." For example, the tool 10 can perform processing such as building the "NC program which has been unloaded from the user program" and transmitting the built program to the industrial control device.

Accordingly, the tool 10 can use the configuration of the "editor according to the related art that can process only an NC program" and curb costs for implementing the tool 10.

The tool 10 allocates an identifier for identifying the NC program to the NC program in the user program and unloads the NC program from the user program. The tool 10 identifies and manages the NC programs by allocating identifiers for identifying the NC program to the NC program in the user program. The tool 10 can use "program numbers," which are added to the heads of the NC programs as information for allowing a user to identify the NC programs in the user program, as the identifiers for identifying the NC programs.

The tool 10 identifies and manages the FBs (hereinafter referred to as "FBs (NC call)") by allocating identifiers for identifying the FBs (NC call) to the FBs (NC call) for calling the NC programs in the user program.

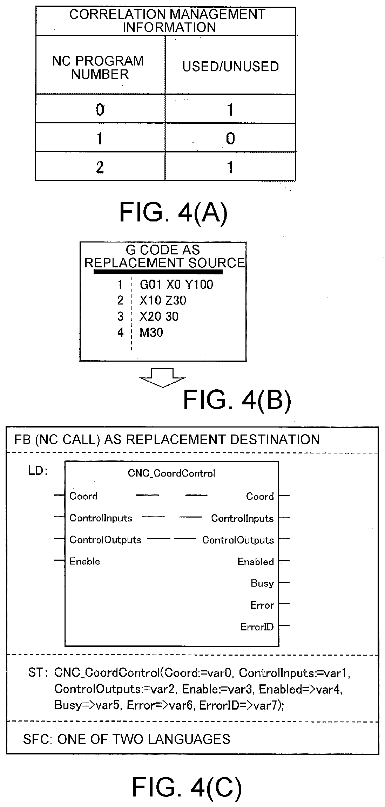

Although details thereof will be described later with reference to FIG. 4(A), the tool 10 manages the NC programs and the FBs (NC call) in correlation with each other, where the NC programs are allocated with the identifiers for identifying the NC programs in the user program and the FBs (NC call) are allocated with the identifiers for identifying the FBs (NC call).

In the tool 10, the display control unit 120 may display the sequence program and the NC program with information for distinguishing the NC program from the sequence program on a single screen in an editable manner.

According to this configuration, the tool 10 displays the NC program with information for distinguishing the NC program from the sequence program on a single screen in an editable manner along with the sequence program.

Accordingly, the tool 10 can enable a user to "easily distinguish the sequence program and the NC program from the user program displayed in an editable manner on the single screen."

According to this configuration, the tool 10 can easily distinguish the sequence program and the NC program in the user program on the basis of the "information for distinguishing the NC program from the sequence program."

In the tool 10, the display control unit 120 may display an area in which the NC program is editable in the sequence program which is programmed by at least one of a ladder diagram and a function block diagram.

According to this configuration, the tool 10 displays an NC box which is an area in which the NC program is editable in the sequence program which is programmed by at least one of a ladder diagram (LD) and a function block diagram (FBD).

Here, the LD and the FBD are program languages which are generally used for the sequence program and are program languages to which a user is accustomed.

Accordingly, the tool 10 can provide a user with an environment in which the NC program can be programmed in the sequence program while the sequence program is programmed using the LD and the FBD.

In the tool 10, the display control unit 120 may display pragmas indicating start and end of the NC program in the sequence program which is programmed by a structured text and may display the NC program between the displayed pragmas indicating the start and the end in an editable manner.

According to this configuration, the tool 10 displays pragmas indicating start and end of the NC program in the sequence program which is programmed by a structured text (ST) and displays the NC program between the displayed pragmas indicating the start and the end in an editable manner.

Here, the ST is a program language which is generally used for the sequence program and is a program language to which a user is accustomed.

Accordingly, the tool 10 can provide a user with an environment in which the NC program can be programmed in the sequence program while the sequence program is programmed using the ST.

In the tool 10, the display control unit 120 may display an action with an attribute indicating the NC program in the sequence program which is programmed by a sequential function chart in an editable manner, where the action includes the NC program.

According to this configuration, the tool 10 displays an action with an attribute indicating the NC program in the sequence program which is programmed by a sequential function chart (SFC) in an editable manner, where the action includes the NC program.

Here, the SFC is a program language which is generally used for the sequence program and is a program language to which a user is accustomed.

Accordingly, the tool 10 can provide a user with an environment in which the NC program can be programmed in the sequence program while the sequence program is programmed using the SFC.

The tool 10 may further include a program transferring unit 140 that transmits the sequence program and the NC program to the controller 20 (the single industrial control device) that synchronously executes the sequence program and the NC program.

According to this configuration, the tool 10 transmits the sequence program and the NC program to the controller 20 that synchronously executes the sequence program and the NC program.

Accordingly, the tool 10 can enable the controller 20 to synchronously execute the sequence program and the NC program which are programmed using the tool by a user.

The tool 10 has been hitherto described in brief, and details of the configuration of the tool 10 and the like will be described below with reference to FIG. 1.

### (Details of tool)

FIG. 1 is a block diagram illustrating a configuration of principal parts and the like of the tool 10. As illustrated in FIG. 1, the tool 10 acquires a user operation received by an input device 30 from the input device 30. Then, the tool 10 displays information corresponding to the acquired user operation, that is, an image corresponding to the acquired user operation, on a display device 40.

The input device 30 receives a user operation (for example, an input operation for programming) of the tool 10 and outputs the received user operation to the tool 10. The input device 30 includes, for example, a keyboard and a mouse and the user operation received by the input device 30 can be received as a command from a user in the tool 10 (specifically, an operation receiving unit 110). The display device 40 is a display that displays an image in accordance with control of the tool 10 (specifically, a display control unit 120).

The tool 10 illustrated in FIG. 1 includes a control unit 100 and a storage unit 200. For the purpose of simplification of description, elements which are not directly associated with the embodiment (for example, elements such as an interface for communication with an external device which is not illustrated) are omitted in description and the block diagram. However, the tool 10 may include the omitted elements on the basis of actual circumstances for embodiment.

### (Control unit)

The control unit 100 comprehensively controls the functions of the tool 10. As illustrated in the drawing, the control unit 100 includes an operation receiving unit 110, a display control unit 120, a program processing unit 130, and a program transferring unit 140.

The operation receiving unit 110 acquires the user operation received by the input device 30 as a command from a user from the input device 30. The operation receiving unit 110 notifies at least one of the display control unit 120 and the program processing unit 130 of the acquired user operation as a command from a user depending on details thereof.

The display control unit 120 controls information (that is, an image) which is displayed on the display device 40. The display control unit 120 displays, for example, an "editing screen" which is a screen for creating and editing a user program including "a sequence program and an NC program which are executed by the controller 20" on the display device 40. That is, the display control unit 120 implements an editor function of supporting a user's operation of programming (creating and editing) a user program. The display control unit 120 includes an editor switching unit 121, a sequence program editor unit 122, and an NC program editor unit 123. The display control unit 120 may store a "user program including a sequence program and an NC program which are executed by the controller 20" which has been created and edited by a user on an editing screen as a user program 201 in the storage unit 200.

The sequence program editor unit 122 displays an image for allowing a user to program a sequence program on the display device 40. The sequence program editor unit 122 displays, for example, a "sequence program editing screen" which is a screen for allowing a user to program a sequence program on the display device 40.

The sequence program editor unit 122 displays a "sequence program editing area" which is an area for allowing a user to program a sequence program in an NC program editing screen. The "NC program editing screen" is a screen which is displayed on the display device 40 by the NC program editor unit 123 and is a screen for "allowing a user to program an NC program."

That is, the sequence program editor unit 122 is an editor that provides an environment for allowing a user to create and edit a sequence program. The sequence program editor unit 122 provides an environment for allowing a user to create and edit a sequence program, for example, based on International Electrotechnical Commission (IEC) 61131-3. Specifically, the sequence program editor unit 122 provides an environment for allowing a user to create and edit a sequence program using the following program languages. That is, the sequence program editor unit 122 provides an environment for programming using a ladder diagram (LD), a function block diagram (FBD), structured text (ST), a sequential function chart (SFC), or the like. The sequence program editor unit 122 may provide an environment for allowing a user to create and edit a sequence program using an instruction list (IL). The sequence program editor unit 122 may provide an environment for allowing a user to create and edit a sequence program in which a plurality of program languages are combined.

The sequence program editor unit 122 displays, for example, an LD editing screen for allowing a user to create and edit a sequence program mainly using the LD on the display device 40. The sequence program editor unit 122 displays, for example, an FBD editing screen for allowing a user to create and edit a sequence program mainly using the FBD on the display device

40. The sequence program editor unit 122 displays, for example, an ST editing screen for allowing a user to create and edit a sequence program mainly using the ST on the display device 40. The sequence program editor unit 122 displays, for example, an SFC editing screen for allowing a user to create and edit a sequence program mainly using the SFC on the display device 40. That is, the sequence program editor unit 122 includes functions of an LD editor, an FBD editor, an ST editor, and an SFC editor which are generally used in the related art.

On the LD editing screen, the FBD editing screen, the ST editing screen, and the SFC editing screen, a user can also create and edit a sequence program using a program language other than the LD, the FBD, the ST, and the SFC. For example, a user can create and edit a sequence program in which the LD, the FBD, and the ST are combined on the LD editing screen. A plurality of program languages which are defined in the IEC 61131-3 have merits and demerits and a user can appropriately use the plurality of program languages for necessary purposes using the tool 10. Accordingly, a user can realize reduction of a programming time (a coding time) and improve readability of a program programmed using the tool 10.

The NC program editor unit 123 displays an image for allowing a user to program an NC program on the display device 40. The NC program editor unit 123 displays, for example, an "NC program editing screen" which is a screen for allowing a user to program an NC program on the display device 40.

The NC program editor unit 123 displays an "NC program editing area" which is an area for allowing a user to program (create and edit) an NC program in a sequence program editing screen. The "sequence program editing screen" is a screen which is displayed on the display device 40 by the sequence program editor unit 122 and is a screen for "allowing a user to program a sequence program."

That is, the NC program editor unit 123 is an editor that provides an environment for allowing a user to create and edit an NC program and is an editor that provides an environment for allowing a user to create and edit an NC program, for example, using G code, M code, or the like.

The editor switching unit 121 switches the editor for processing a user's programming in accordance with the user operation received by the operation receiving unit 110, that is, causes the sequence program editor unit 122 or the NC program editor unit 123 to process a user's programming. Specifically, the editor switching unit 121 performs (A) to (D) which are described below.
(A) When a user operation of "providing an NC program editing area" is received on the sequence program editing screen by the operation receiving unit 110, the editor switching unit 121 causes the NC program editor unit 123 to perform the following process. That is, when a user operation of "providing an NC program editing area" is performed in display on the sequence program editing screen, the editor switching unit 121 causes the NC program editor unit 123 to display the NC program editing area in the sequence program editing screen.
   (A-1) When a user operation of "providing an NC program editing area" is performed in the LD editing screen, the editor switching unit 121 causes the NC program editor unit 123 to display an "NC box" as an "NC program editing area" in the LD editing screen. Specifically, the editor switching unit 121 displays an "NC box" which is an area (an NC program editing area) for editing and describing an "NC program" in a "sequence program (an LD program) which is programmed mainly using the LD."
   (A-2) When a user operation of "providing an NC program editing area" is performed in the FBD editing screen, the editor switching unit 121 causes the NC program editor unit 123 to display an "NC box" as an "NC program editing area" in the FBD editing screen. Specifically, the editor switching unit 121 displays an "NC box" in a "sequence program (an FBD program) which is programmed mainly using the FBD."
   (A-3) When a user operation of describing pragmas indicating start and end of an "NC program" is performed in the ST editing screen, the editor switching unit 121 causes the NC program editor unit 123 to display an area surrounded with the pragmas as an "NC program editing area."
   (A-4) When a user operation of selecting an "NC program" as an attribute of a certain "action" is performed in the SFC editing screen, the editor switching unit 121 causes the NC program editor unit 123 to display an area in the action as an "NC program editing area."
(B) When a user operation of "providing a sequence program editing area" is received on the NC program editing screen by the operation receiving unit 110, the editor switching unit 121 causes the sequence program editor unit 122 to perform the following process. That is, when a user operation of "providing a sequence program editing area" is performed during display of the NC program editing screen, the editor switching unit 121 causes the sequence program editor unit 122 to display a sequence program editing area in the NC program editing screen.
(C) When a user operation on an "NC program editing area" in the "sequence program editing screen" is received by the operation receiving unit 110, the editor switching unit 121 causes the NC program editor unit 123 to display information corresponding to the user operation. In other words, the editor switching unit 121 causes the NC program editor unit 123 to process the user operation on the "NC program editing area" as "programming of an NC program."
(D) When a user operation on a "sequence program editing area" in the NC program editing screen" is received by the operation receiving unit 110, the editor switching unit 121 causes the sequence program editor unit 122 to display information corresponding to the user operation. In other words, the editor switching unit 121 causes the sequence program editor unit 122 to process the user operation on the "sequence program editing area" as "programming of a sequence program."

Conclusively, the display control unit 120 displays the LD editing screen, the FBD editing screen, the ST editing screen, and the SFC editing screen on the display device 40 and displays an NC program editing area in the screens. That is, the display control unit 120 displays the sequence program editing screen on the display device 40 and displays an NC program editing area capable of programming an NC program in the displayed sequence program editing screen.

Specifically, (I) the display control unit 120 causes the display device 40 to display an "NC box" as an NC program editing area in a sequence program on the LD editing screen. (II) The display control unit 120 causes the display device 40 to display an "NC box" as an NC program editing area in a sequence program on the FBD editing screen. (III) The display control unit 120 causes the display device 40 to display an area surrounded with the "pragmas indicating start and end of an NC program" described in a sequence program as an NC program editing area on the ST editing screen. (IV) The display control unit 120 causes the display device 40 to display an "action" in which an "NC program" has been selected as an attribute as an NC program editing area on the SFC editing screen.

The program processing unit 130 is a compiler that compiles a user program (a source program) created on an editing screen which is provided by the display control unit 120 and creates the user program in the form of an object program. The program processing unit 130 includes a program separating unit 131, a program replacing unit 132, a sequence program processing unit 133, and an NC program processing unit 134.

The program separating unit 131 separates a sequence program and an NC program from a user program including "the sequence program and the NC program." For example, the program separating unit 131 separates an NC program from a sequence program including the NC program and stores (unloads) the separated NC program.

Specifically, (A) the program separating unit 131 separates a program programmed in an "NC box" in a sequence program as an NC program from the sequence program (a user program) in the LD editing screen. The program separating unit 131 stores the separated program as an NC program 204 in the storage unit 200.
(B) The program separating unit 131 separates a program programmed in an "NC box" in a sequence program as an NC program from the sequence program (a user program) on the FBD editing screen. The program separating unit 131 stores the separated program as an NC program 204 in the storage unit 200.
(C) The program separating unit 131 separates a program programmed in an area surrounded with "the pragmas indicating start and end of an NC program" in a sequence program as an NC program from the sequence program (a user program) on the ST editing screen. The program separating unit 131 stores the separated program as an NC program 204 in the storage unit 200.
(D) The program separating unit 131 separates a program programmed in an "action" with an attribute of "NC program" in a sequence program as an NC program from the sequence program (a user program) on the SFC editing screen. The program separating unit 131 stores the separated program as an NC program 204 in the storage unit 200.

In addition, the program separating unit 131 may separate a sequence program from an NC program including the sequence program and store (unload) the separated sequence program, for example.

The program replacing unit 132 allocates the following identification information (number, ID) to a FB for calling the separated NC program and inserts the FB to a position at which the separated NC program was located in a sequence program (a user program) from which the NC program was separated. That is, the program replacing unit 132 acquires an empty number (a number not correlated with any NC program) with reference to correlation management information 202, allocates the acquired empty number to the FB for calling the separated NC program, and inserts the FB into the sequence program. That is, the program replacing unit 132 inserts the FB, with an identifier corresponding to the separated NC program and for calling the separated NC program, into a position at which the separated NC program was located in the sequence program (the user program). For example, when a sequence program (a user program) including an NC program is built, the program replacing unit 132 replaces the NC program included in the sequence program with a "sequence program in which the NC program is called."

In the following description, an "FB for calling a corresponding NC program" may be referred to as an "FB (NC call)." For example, the program replacing unit 132 replaces an NC program with "ID=01" in a sequence program with an "FB (NC call)" with "ID (number)=01." The program replacing unit 132 replaces an NC program with "ID=02" in the sequence program with an "FB (NC call)" with "ID (number)=02." The "FB (NC call)" with "ID=01" is an FB for calling the NC program with "ID=01" and the "FB (NC call)" with "ID=02" is an FB for calling the NC program with "ID=02."

When a "certain NC program" is replaced with an "FB (NC call)" for calling the "certain NC program," the program replacing unit 132 stores the "NC program" along with the number (ID) allocated to the "FB (NC call)" as correlation management information 202 in the storage unit 200. In the above-mentioned example, the program replacing unit 132 stores information in which the NC program with "ID=01" and the "FB (NC call)" with "ID=01" are correlated with each other as the correlation management information 202 in the storage unit 200. The program replacing unit 132 stores information in which the NC program with "ID=02" and the "FB (NC call)" with "ID=02" are correlated with each other as the correlation management information 202 in the storage unit 200.

The sequence program processing unit 133 is a compiler of a sequence program and serves to remove information unnecessary for execution of a "sequence program", such as comments, and creates the sequence program in the form of an object program. Specifically, the sequence program processing unit 133 compiles the sequence program from which the NC program has been separated and into which the FB with an identifier corresponding to the separated NC program and for calling the separated NC program has been inserted.

The NC program processing unit 134 is a compiler of an NC program and creates the NC program in the form of an object program. Specifically, the NC program processing unit 134 performs the compiling by removing information unnecessary for execution of an "NC program", such as comments, from the NC program separated from the sequence program (the user program) by the program separating unit 131.

The program transferring unit 140 is a functional unit that transmits a user program in the form of an object program which has been created by the program processing unit 130 to the controller 20 and includes a sequence program transferring unit 141 and an NC program transferring unit 142. The sequence program transferring unit 141 transmits a sequence program in the form of an object program created by the sequence program processing unit 133 to the controller 20. The NC program transferring unit 142 transmits an NC program in the form of an object program created by the NC program processing unit 134 to the controller 20.

The functional blocks of the control unit 100 can be embodied by causing a central processing unit (CPU) or the like to read a program stored in a storage device (the storage unit 200), which is embodied by a read only memory (ROM), a non-volatile random access memory (NVRAM), or the like, into a random access memory (RAM) which is not illustrated and to execute the read program.

### (Storage unit)

The storage unit 200 stores a variety of data which are used by the tool 10. That is, the storage unit 200 stores (1) a control program, (2) an OS program, (3) application programs for performing various functions, which are executed by the tool 10, and (4) a variety of data which are read when the application programs are executed. Data (1) to (4) are stored in a nonvolatile storage device such as a read only memory (ROM), a flash memory, an erasable programmable ROM (EPROM), an electrically EPROM (EEPROM: registered trademark), or a hard disc drive (HDD). The storage unit 200 stores a user program 201, correlation management information 202, a sequence program 203, an NC program 204, and an IEC-NC program table 205.

The user program 201 is a user program including a "sequence program and an NC program which are executed by the controller 20" which have been created and edited on an editing screen, which is displayed on the display device 40 by the display control unit 120, by a user.

The correlation management information 202 is information for managing an "NC program" as a replacement source which is replaced by the program replacing unit 132 and an "FB (NC call)" as a replacement destination in correlation with each other. For example, the correlation management information 202 correlates identification information (ID) and a program content of an "NC program" as a replacement source with identification information (ID, number) and a program content of an "FB (NC call)" as a replacement destination. Details of the correlation management information 202 will be described later with reference to FIG. 4(A).

The sequence program 203 is a sequence program in which an NC program in a sequence program (a user program) including the NC program has been replaced with an "FB (NC call)" by the program replacing unit 132.

The NC program 204 is an NC program which has been separated from a sequence program (a user program) including the NC program by the program separating unit 131. In other words, the NC program 204 is an NC program which is correlated with an "FB (NC call)" by the program replacing unit 132.

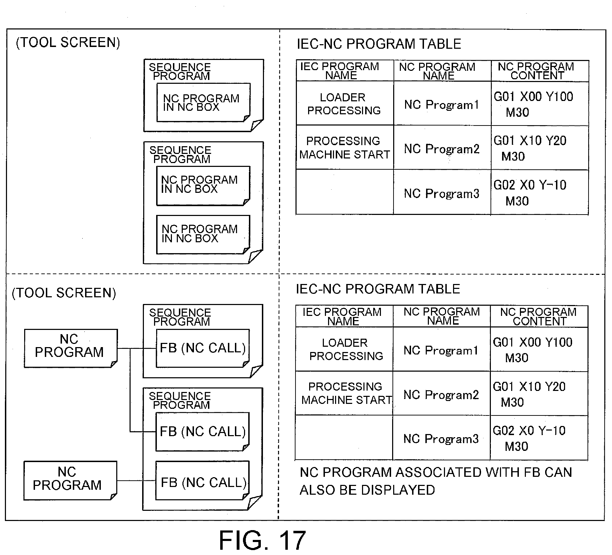

The IEC-NC program table 205 is information in which identification information such as a name of a sequence program is correlated with at least one of identification information and content of an NC program in the sequence program (the user program) including the NC program. Details of the IEC-NC program table 205 will be described later with reference to FIG. 17 and the like.

### (Data structure of elements constituting user program)

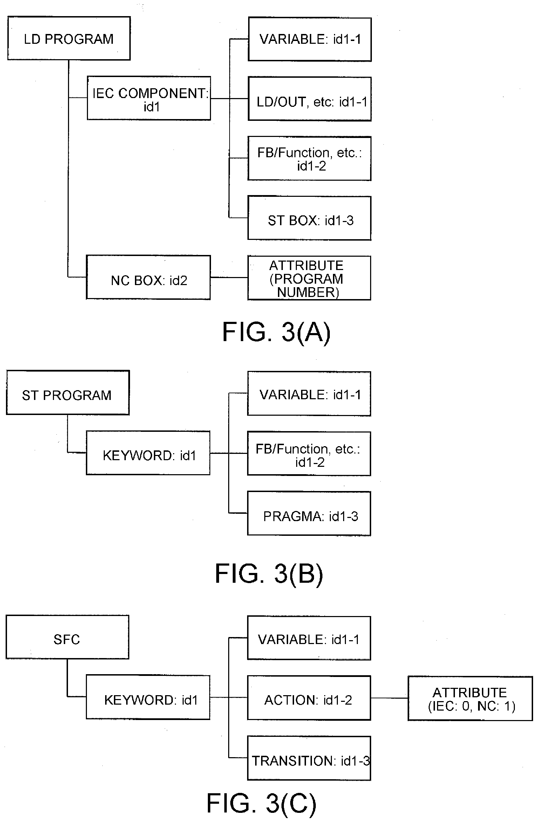

FIG. 3(A), FIG. 3(B), and FIG. 3(C) are diagrams illustrating an example of a data structure of constituent elements (components such as command words) of a user program in the tool 10. As illustrated in FIG. 3(A), constituent elements of an LD program include "IEC component:id1" and "NC box:id2." "IEC component:id1" includes "variable:id1-1," "LD/OUT, etc.:id1-1," "FB/Function, etc.:id1-2," and "ST box:id1-3." Here, "ST box:id1-3" denotes an ST program which can be described in the LD program. "NC box:id2" includes a "program number" as an attribute.

As illustrated in FIG. 3(B), constituent elements of an ST program include a "keyword:id1." "Keyword:id1" includes "variable:id1-1," "FB/Function, etc.:id1-2," and "pragma:id1-3."

As illustrated in FIG. 3(C), constituent elements of an SFC program include "keyword:id1." "Keyword:id1" includes "variable:id1-1," "action:id1-2," and "transition:id1-3." A user can select the "attribute" of "action:id1-2," sets the attribute of an action of describing a sequence program in an action to "0" (IEC:0), and sets the attribute of an action of describing an NC program in an action to "1" ((NC:1).

FIG. 4(A), FIG. 4(B), and FIG. 4(C) are diagrams illustrating an example of "correlation management information 202 referred to by the program replacing unit 132," an "NC program" as a replacement source and an "FB (NC call)" as a replacement destination which are replaced by the program replacing unit 132.

FIG. 4(A) is a diagram illustrating an example of a data structure of the correlation management information 202. As described above, the correlation management information 202 is information in which "an NC program programmed in a sequence program (an NC component, that is, an NC program as a constituent (component) of a sequence program)" and the "FB (NC call)" are correlated. The program replacing unit 132 allocates an empty number to the "FB (NC call)" with reference to the correlation management information 202 and sets the number as an ID of the "FB (NC call)."

In the example illustrated (A) of FIG. 4, "0" and "2" are used for the ID (the "NC program number" in the drawing) of the "FB (NC call)" ("used/unused=1"). That is, certain NC components (NC programs) are correlated with the "FB (NC call)" with "ID=0" and the "FB (NC call)" with "ID=2." For example, the "FB (NC call)" with "ID=0" is an FB for calling an NC program with "ID=0" and the "FB (NC call)" with "ID=2" is an FB for calling an NC program with "ID=2."

On the other hand, "1" is not used for the "NC program number" of the "FB (NC call)" ("used/unused=0"). Accordingly, the program replacing unit 132 may set an ID (="NC program number") of the "FB (NC call)" for calling a certain NC component to "1" as for the NC component (for example, an NC program with "ID=1").

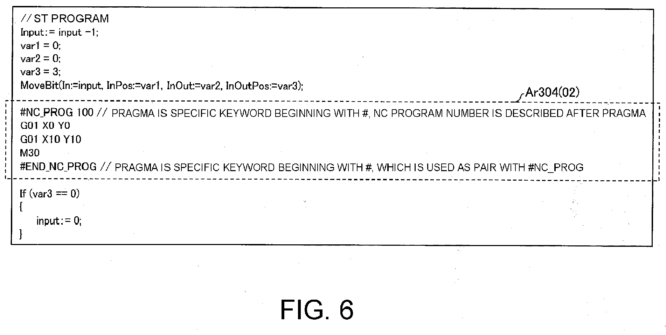

For example, in FIG. 6 which will be described, an NC program in which "100" is added as a "program number (information which is added to an NC program to specify an NC program in a user program by a user)" is illustrated. When it is confirmed that "100" is not used for the NC program in the user program illustrated in FIG. 6 with reference to the correlation management information 202, the program replacing unit 132 performs the following process. That is, the program replacing unit 132 sets "100" which is the "program number (NC program number)" added to the head of the NC program as the ID (="NC program number") of the "FB (NC call)" for calling the NC program. That is, the program replacing unit 132 may set the ID of the FB (NC call) for calling an NC program to a program number of the NC program with reference to the correlation management information 202. The program separating unit 131 may allocate "ID (NC program number)=100" to the NC program and unload the NC program from the user program.

The tool 10 identifies NC programs in a user program, for example, using "program numbers." The tool 10 identifies FBs (NC call) for calling the NC programs using IDs which are allocated to the FBs (NC call). The tool 10 manages information (for example, the correlation management information 202) in which program numbers of NC programs in a user program are correlated with IDs of FBs (NC call) for calling the NC programs.

FIG. 4(B) illustrates an example of an "NC program" as a replacement source which is replaced by the program replacing unit 132. The "G code as replacement source" illustrated in FIG. 4(B) is replaced with the "FB (NC call)" illustrated in FIG. 4(C) by the program replacing unit 132. In the following description, an "NC program programmed in a sequence program" which is replaced with an "FB (NC call)" by the program replacing unit 132 is also referred to as an "NC component."

FIG. 4(C) is a diagram illustrating with what FB, that is, with what sequence program, an NC component is replaced by the program replacing unit 132 in an LD program, an FBD program, an ST program, and an SFC program.

In "LD" of the "FB (NC call) as replacement destination," an example of an "FB (NC call)" for calling the NC component, that is, an example of a sequence program calling the NC component, in an LD program and an FBD program including the NC component is described.

In "ST" of the "FB (NC call) as replacement destination," an example of an "FB (NC call)" for calling the NC component, that is, an example of a sequence program calling the NC component, in an ST program including the NC component is described.

In "SFC" of the "FB (NC call) as replacement destination," "one of two languages" is described. That is, in an SFC program including the NC component, the "FB (NC call)" for calling the NC component is the same as the "FB (NC call)" described in the "LD" or the "ST."

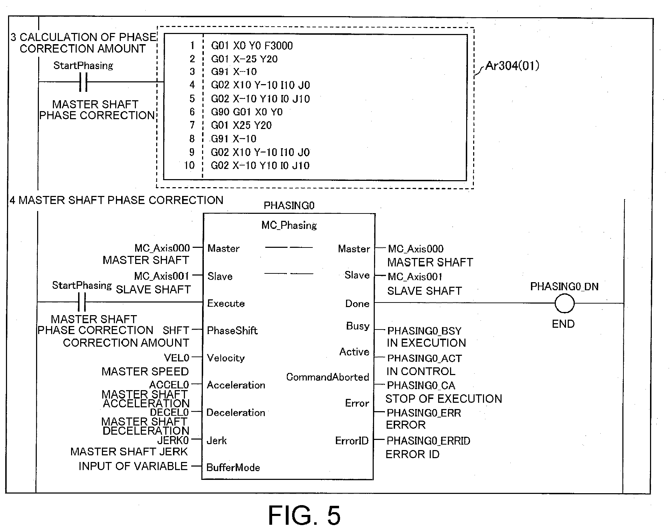

FIG. 5 is a diagram illustrating an example in which an NC program is created and edited in an LD program (or an FBD program). The display control unit 120 causes the display device 40 to display an "NC box" (an area Ar304(01) surrounded with a dotted line) which is an area in which an NC program is created and edited in a sequence program on the LD editing screen (or the FBD editing screen). In FIG. 5, the area Ar304(01) indicates an "NC box" which is an area in which an NC program can be programmed using G code, M code, or the like.

FIG. 6 is a diagram illustrating an example in which an NC program is created and edited in an ST program. The display control unit 120 causes the display device 40 to display an area (an area Ar304(02) surrounded with a dotted line) which is surrounded with "pragmas indicating start and end of an NC program" as an NC program editing area on the ST editing screen.

FIG. 6 illustrates an example in which the "pragmas indicating start and end of an NC program" are specific keywords beginning with "#." That is, in the example illustrated in FIG. 6, the "pragma indicating start of an NC program" is expressed by describing identification information (an NC program number) of an NC program after "#" and the "pragma indicating end of an NC program" is "#END_NC_PROG." The display control unit 120 displays an NC program editing area in which an NC program with identification information of "NC_PROG 100" can be programmed using G code, M code, or the like between "#NC_PROG 100" and "#END_NC_PROG."

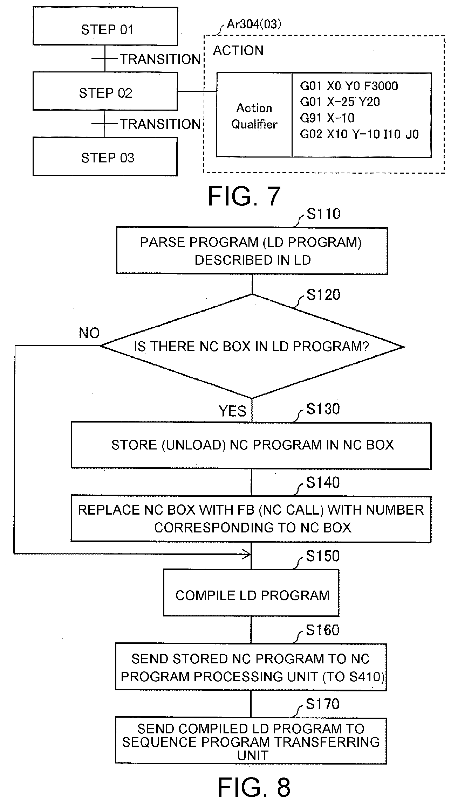

FIG. 7 is a diagram illustrating an example in which an NC program is created and edited in an SFC program. The display control unit 120 causes the display device 40 to display an ""action" in which an "NC program" has been selected as an attribute" (an area Ar304(03) surrounded with a dotted line) in a sequence program, as an NC program editing area on the SFC editing screen. In FIG. 7, the area Ar304(03) indicates an "action" in which an NC program can be programmed using G code, M code, or the like.

### (Process performed by tool)

As described hitherto, a control method which is performed by the tool 10 is a control method of a support device that supports creation of a user program which is executed by the controller 20 (an industrial control device), the support method including: a reception step of receiving a user's programming operation associated with a sequence program and an NC program which are to be synchronously executed; and a display control step of displaying the sequence program and the NC program as the user program on a single screen in an editable manner in accordance with the programming operation received in the reception step.

According to this method, the support device displays the sequence program and the NC program, which have to be synchronously executed, on a single screen in an editable manner.

Accordingly, the control method can enable a user to easily understand the entire user program including the sequence program and the NC program and can improve a user's programming efficiency. The user can create and edit the sequence program and the NC program on a single screen using the tool 10 which is an editor (a programming support device) that performs the control method. That is, a user can efficiently program the user program including the sequence program and the NC program using the editor that performs the tool 10.

That is, the display control unit 120 causes the display device 40 to display an "editing screen" which is a screen for allowing a user to program a user program including "a sequence program and an NC program which are executed by the controller 20." The operation receiving unit 110 receives a user's programming operation associated with a "sequence program and an NC program which are to be synchronously executed by the controller 20."

A process routine which is performed on a sequence program (a user program), which has been created and edited to include an NC program by a user, by the tool 10 on the LD editing screen, the FBD editing screen, the ST editing screen, and the SFC screen will be described below with reference to FIGS. 8 to 11.

### (LD program)

FIG. 8 is a flowchart illustrating the outline of a process routine which is performed on an "LD program (a user program) including an NC program," which has been created and edited on the LD editing screen, by the tool 10. In FIG. 8, first, the program processing unit 130 (particularly, the program separating unit 131) parses a program (an LD program) which is programmed using the LD (S110) and determines whether an NC box is present in the LD program (S120).

When it is determined that "an NC box is present in the LD program" (YES in S120), the program separating unit 131 performs the following process. That is, the program separating unit 131 stores (unloads) the NC program in the NC box (S130) and stores the NC program programmed in the "NC box" in the LD program as an NC program 204 in the storage unit 200. The program processing unit 130 (particularly, the program replacing unit 132) replaces the NC box in the LD program with an "FB (NC call)" with a number (ID) corresponding to the NC box (S140).

The program processing unit 130 (particularly, the sequence program processing unit 133) complies the LD program (the LD program in which the NC box is replaced with the "FB (NC call)" with a number corresponding to the NC box) (S150).

When the program separating unit 131 determines that "no NC box is present in the LD program" (NO in S120), the program processing unit 130 (particularly, the sequence program processing unit 133) compiles the LD program (including no NC box) (S150).

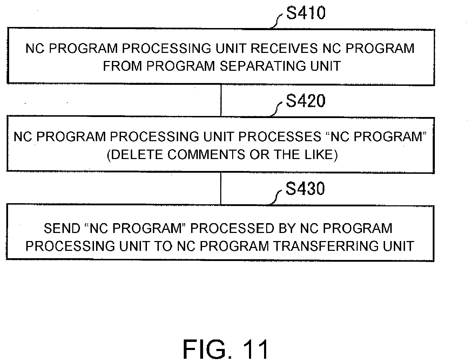

The program separating unit 131 sends the stored (unloaded) NC program to the NC program processing unit 134 and the process routine transitions to S410 illustrated in FIG. 11 (S160). The NC program processing unit 134 may acquire the NC program 204 stored in the storage unit 200 instead of acquiring the NC program from the program separating unit 131. The sequence program processing unit 133 sends the compiled LD program (the sequence program) to the sequence program transferring unit 141 (S170).

The tool 10 performs the same processes as illustrated in FIG. 8 on an FBD program (a user program) including an "NC box (that is, an NC program)" which are created and edited on the FBD editing screen.

### (ST program)

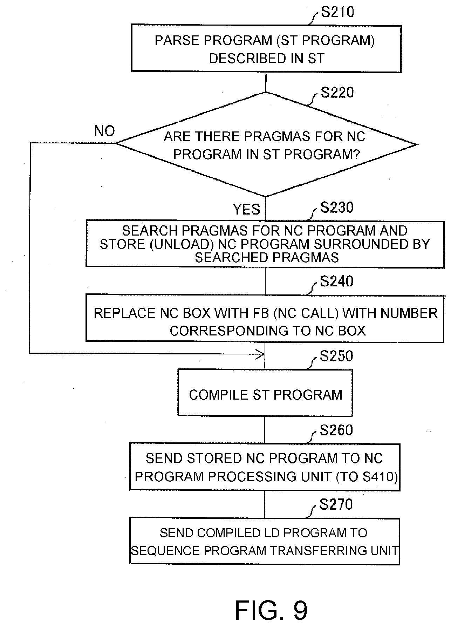

FIG. 9 is a flowchart illustrating the outline of a process routine which is performed on an "ST program (a user program) including an NC program," which has been created and edited on the ST editing screen, by the tool 10. In FIG. 9, first, the program processing unit 130 (particularly, the program separating unit 131) parses a program (an ST program) which is programmed using the ST (S210) and determines whether pragmas for an NC program is present in the ST program (S220).

When it is determined that "pragmas for an NC program are present in the ST program" (YES in S220), the program separating unit 131 searches the pragmas for an NC program and stores (unloads) the NC program surrounded with the searched pragmas (S230). For example, the program separating unit 131 stores the NC program which is programmed in an area surrounded with the pragmas for an NC program in the ST program as an NC program 204 in the storage unit 200.

The program processing unit 130 (particularly, the program replacing unit 132) replaces the NC program in the ST program with an "FB (NC call)" with a number corresponding to the NC program (S240). More accurately, the program processing unit 130 replaces the pragmas for an NC program and the NC program which is programmed in an area surrounded with the pragmas in the ST program with the "FB (NC call)" with a number corresponding to the NC program.

The program processing unit 130 (particularly, the sequence program processing unit 133) compiles the ST program (S250). The program processing unit 130 compiles the "ST program in which the pragmas for an NC program and the NC program programmed in the area surrounded with the pragmas have been replaced with the "FB (NC call)" with a number corresponding to the NC program."

When the program separating unit 131 determines that "no pragma for an NC program is present in the ST program" (NO in S220), the program processing unit 130 (particularly, the sequence program processing unit 133) compiles the ST program (S250). The program processing unit 130 compiles the ST program which does not contain the pragmas for an NC program.

The program separating unit 131 sends the stored (unloaded) NC program to the NC program processing unit 134 and the process routine transitions to S410 illustrated in FIG. 11 (S260). The NC program processing unit 134 may acquire the NC program 204 stored in the storage unit 200 instead of acquiring the NC program from the program separating unit 131. The sequence program processing unit 133 sends the compiled ST program (the sequence program) to the sequence program transferring unit 141 (S270).

### (SFC program)

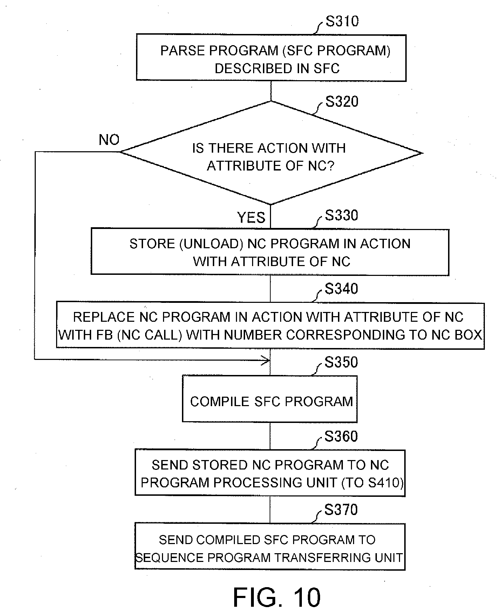

FIG. 10 is a flowchart illustrating the outline of a process routine which is performed on an "SFC program (a user program) including an NC program," which has been created and edited on the SFC editing screen, by the tool 10. In FIG. 10, first, the program processing unit 130 (particularly, the program separating unit 131) parses a program (an SFC program) which is programmed using the SFC (S310) and determines whether there is an action with an attribute of NC (S320).

When it is determined that "there is an action with an attribute of NC" (YES in S320), the program separating unit 131 stores (unloads) the NC program in the action with an attribute of NC (S330). For example, the program separating unit 131 stores the NC program which is programmed in the "action with an attribute of NC" in the SFC program as an NC program 204 in the storage unit 200. The program processing unit 130 (particularly, the program replacing unit 132) replaces the NC program in the "action with an attribute of NC" with the "FB (NC call)"with a number corresponding to the NC program (S340).

The program processing unit 130 (particularly, the sequence program processing unit 133) compiles the SFC program (S350). The program processing unit 130 compiles the "SFC program in which the NC program in the "action with an attribute of NC" has been replaced with the "FB (NC call)" with a number corresponding to the NC program."

When the program separating unit 131 determines that "there is no action with an attribute of NC" (NO in S320), the program processing unit 130 (particularly, the sequence program processing unit 133) compiles the SFC program (S350). The program processing unit 130 compiles the SFC program not including an "action with an attribute of NC."

The program separating unit 131 sends the stored (unloaded) NC program to the NC program processing unit 134 and the process routine transitions to S410 illustrated in FIG. 11 (S360). The NC program processing unit 134 may acquire the NC program 204 stored in the storage unit 200 instead of acquiring the NC program from the program separating unit 131. The sequence program processing unit 133 sends the compiled SFC program (the sequence program) to the sequence program transferring unit 141 (S370).

FIG. 11 is a flowchart illustrating the outline of a process routine which is performed by the tool 10 after the process routines illustrated in FIGS. 8 to 10. When an NC program is received from the program separating unit 131 (S410), the NC program processing unit 134 processes the received "NC program," performs deleting of comments or the like, and then complies the NC program (S420). The NC program processing unit 134 sends the processed "NC program", that is, the compiled "NC program," to the NC program transferring unit 142 (S430). The subsequent transmission process which is performed by the tool 10 is based on a transmission process of a known controller and thus details thereof will be omitted.

### (Specific example of replacement)

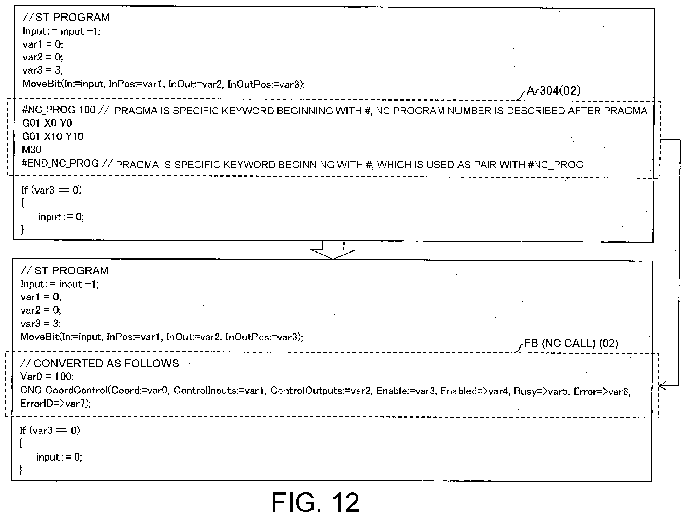

FIG. 12 is a diagram illustrating an example in which the program replacing unit 132 replaces an NC program (an NC component) in a sequence program (a user program) with an "FB (NC call)" for calling the NC program. Specifically, a user program (a sequence program) including an NC component as illustrated in FIG. 6 is illustrated in an upper part of FIG. 12. In the upper part of FIG. 12, an area Ar304(02) surrounded with "#NC_PROG 100" which is the "pragma indicating start of an NC program" and "#END_NC_PROG" which is the "pragma indicating end of the NC program" is an NC program editing area. In a lower part of FIG. 12, an example of the same "FB (NC call) (02)" as illustrated in the stage of "ST" of the "FB (NC call) as replacement destination" in FIG. 4(C) is illustrated.

The program replacing unit 132 replaces the NC program editing area (the area Ar304(02) surrounded with a dotted line) in the upper part of FIG. 12 with the "FB (NC call) (02)" illustrated in the lower part of FIG. 12. The "FB (NC call) (02)" is an FB for calling the NC program (an NC component) described in the area Ar304(02) and is an FB with an ID (a number) corresponding to only the NC program described in the area Ar304(02).

FIG. 12 illustrates an example in which an NC component in an ST program is replaced with the same "FB (NC call)" in FIG. 4(C) as illustrated in the stage of "ST" of the "FB (NC call) as replacement destination" which is the "FB (NC call)" for calling the NC component. The program replacing unit 132 replaces an NC component in an LD program, an FBD program, or an SFC program with the same "FB (NC call)" as illustrated in the "FB (NC call) as replacement destination" in FIG. 4(C) which is an "FB (NC call)" for calling the NC component.

### (NC program list displaying function)

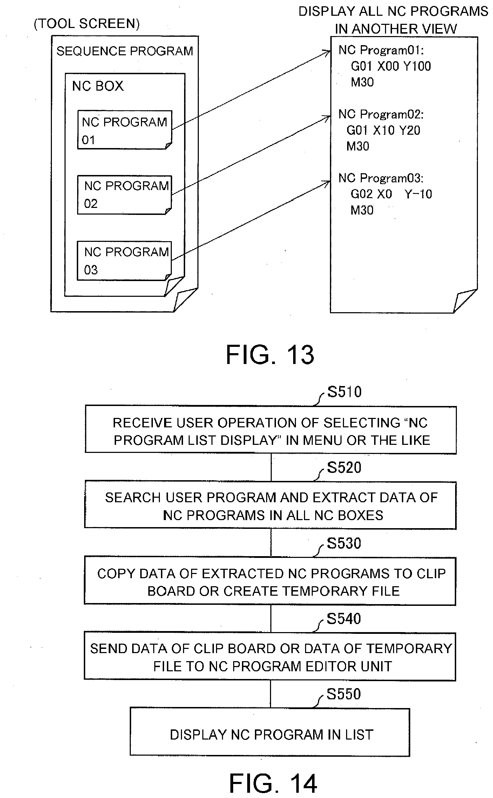

FIG. 13 is a diagram illustrating the outline of an "NC program list displaying function" of the tool 10. When a plurality of NC programs are scattered and described in a sequence program (a user program), a user may confirm the plurality of NC programs in a list. The tool 10 has an "NC program list displaying function" and the display control unit 120 (particularly, the NC program processing unit 134) displays a list of only a plurality of NC programs which are present in the sequence program as another view as illustrated in FIG. 13. The tool 10 prevents a decrease in list readability for "what NC program operates" by displaying a plurality of NC programs which are present in a sequence program in a list.

FIG. 14 is a flowchart illustrating an example of a process routine of the "NC program list displaying function" performed by the tool 10. As illustrated in FIG. 14, when the operation receiving unit 110 receives a user operation of selecting "NC program list display" in a menu or the like (S510), the display control unit 120 (particularly, the program separating unit 131) performs the following process.

For example, when a user operation of selecting "NC program list display" is performed in the LD editing screen, the program separating unit 131 searches the user program which is being displayed on the LD editing screen and separates data of NC programs in all NC boxes (S520). That is, when a user operation of selecting "NC program list display" is performed, the program separating unit 131 separates all the NC programs in the user program (the sequence program) which is displayed on the editing screen in an editable manner. When a user operation of selecting "NC program list display" is performed on an arbitrary user program, the program separating unit 131 may separate all the NC programs in the user program.

The program separating unit 131 copies data of the extracted NC programs to a clip board or creates a temporary file (S530), and sends the data in the clip board or data of the temporary file to the NC program editor unit 123 (S540). The NC program editor unit 123 displays a list of all the NC programs separated by the program separating unit 131 in another view (S550), that is, displays a list of the data in the clip board or data of the temporary file.

As described above with reference to FIGS. 13 and 14, the display control unit 120 of the tool 10 may display a list of the NC programs in the user program.

According to this configuration, the tool 10 displays the NC programs of the user program in a list. Specifically, the tool 10 causes the display device 40 to display a list of the NC programs in the user program.

Accordingly, for example, when a plurality ofNC programs are scattered in a single user program, the tool 10 can display a list of the plurality of NC programs scattered in the user program, thereby improving readability.

### (NC program enlargement displaying function)

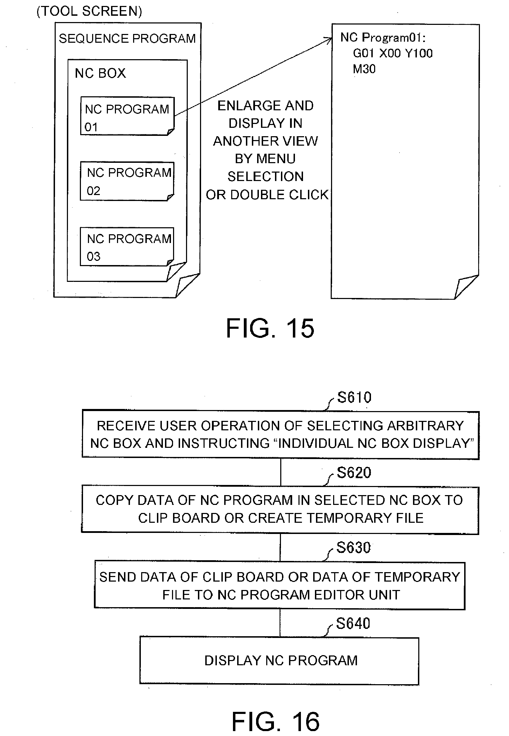

FIG. 15 is a diagram illustrating the outline of an "NC program enlargement displaying function" of the tool 10. Since an "NC program editing area" for allowing a user to program an NC program in a user program (a sequence program) cannot be displayed large in an editing screen, readability of a user is not good. Therefore, when a user operation of selecting an "NC program enlargement displaying function (individual NC box selection)" on an NC program which is being programmed in an "NC program editing area" such as an NC box is received, the tool 10 enlarges and displays the NC program in another editor. The tool 10 prevents a decrease in readability by displaying the NC program which is being programmed in the "NC program editing area" such that the NC program is editable in another editor.

FIG. 16 is a flowchart illustrating an example of a process routine of the "NC program enlargement displaying function" performed by the tool 10. As illustrated in FIG. 16, the operation receiving unit 110 receives a user operation of selecting an NC box and instructing "individual NC box display (NC program enlargement display)," for example, in an LD editing screen (S610). In other words, the operation receiving unit 110 receives a user operation of selecting an NC program which has to be enlarged and displayed such that the NC program is editable in another view.

The display control unit 120 (particularly, the program separating unit 131) copies data of the NC program in the "NC program editing area" of the selected NC box to a clip board or creates a temporary file (S620). The program separating unit 131 sends the created "data in the clip board or data of the temporary file" to the NC program editor unit 123 (S630). The NC program editor unit 123 enlarges and displays the NC program acquired from the program separating unit 131 in another view in an editable manner (S640).

As described above with reference to FIGs. 15 and 16, in the tool 10, the display control unit 120 may enlarge and display, in an editable manner, the NC program of the user program on a screen other than a screen on which the user program is displayed in an editable manner.

According to this configuration, the tool 10 enlarges and displays, in an editable manner, the NC program of the user program on a screen other than a screen on which the user program is displayed in an editable manner. That is, the tool 10 can enlarge and display the NC program which is being programmed into the user program in another editor view. Specifically, the tool 10 causes the display device 40 to enlarge and display the NC program which is being built into the user program in another editor view.

Accordingly, the tool 10 can provide an environment that can prevent readability of the NC program from deteriorating and enable a user to efficiently build the NC program.

### (IEC-NC program table displaying function)

FIG. 17 is a diagram illustrating the outline of an "IEC-NC program table displaying function" of the tool 10. The "IEC-NC program table displaying function" is a function of displaying an NC program, an "FB (NC call)" for calling the NC program, and a user program (a sequence program) including the NC program in correlation with each other.

The "IEC-NC program table displaying function" is a function of displaying an ID or the like of an "FB (NC call)" for calling, for example, an arbitrary NC program in addition to an ID (a program number), a program name, and content of the NC program. The "IEC-NC program table displaying function" displays information in which an NC program and an "FB (NC call)" for calling the NC program are correlated in a list.

A user can confirm a relationship between an FB (particularly, an "FB (NC call)") in a user program (a sequence program) and an NC program corresponding to the FB by confirming an IEC-NC program table. Accordingly, the user can easily understand "what NC program is used in a user program and in what user program an NC program is used."

The "IEC-NC program table displaying function" is a function of displaying an ID (a program number), a program name, and the like of a sequence program (a user program) including an arbitrary NC program as for the NC program.

In the first row of the IEC-NC program table illustrated in an upper-right part of FIG. 17, the following information is displayed for an NC program with "program name (NC program name)=NC Program1". That is, it can be seen that "content (an NC program content)" is "G01 X00 Y100 M30" for the NC program with "program name=NC Program1." It can also be seen that the NC program with "program name=NC Program1" is described in a user program (a sequence program) with "program name (IEC program name)=loader processing."

In the second row of the IEC-NC program table illustrated in an upper-right part of FIG. 17, the following information is displayed for an NC program with "program name (NC program name)=NC Program2". That is, it can be seen that "content (an NC program content)" is "G01 X10 Y20 M30" for the NC program with "program name=NC Program2." It can also be seen that the NC program with "program name=NC Program2" is described in a user program (a sequence program) with "program name (IEC program name)=machining machine start."

In the third row of the IEC-NC program table illustrated in an upper-right part of FIG. 17, the following information is displayed for an NC program with "program name (NC program name)=NC Program3". That is, it can be seen that "content (an NC program content)" is "G02 X0 Y-10 M30" for the NC program with "program name=NC Program3." It can also be seen that the NC program with "program name=NC Program3" is described in a user program (a sequence program) with "program name (IEC program name)=machining machine start."

Accordingly, a user having confirmed the IEC-NC program table illustrated in the upper-right of FIG. 17 can easily understand "in what user program an NC program is used." The user can understand all NC programs included in the user program with "program name=machining machine start" by confirming the second row and the third row of the IEC-NC program table illustrated in the upper-right part of FIG. 17.

As illustrated in a lower-left part of FIG. 17, a single NC program (an NC component) may be used in a plurality of different user programs (sequence programs). In other words, an "FB (NC call)" for calling a single NC program (an NC component), that is, an "FB (NC call)" with the same ID, may be used in a plurality of different user programs (sequence programs).

When a plurality of NC programs are scattered in a single user program (a sequence program), list readability decreases, but a user can confirm a list of all NC programs in the user program using the IEC-NC program table. The tool 10 displays a relationship between an NC program and a user program (a sequence program) using the NC program in a list and displays, for example, one or more NC programs in correlation with a user program having the NC program embedded therein. The tool 10 displays a relationship between an NC program and an FB for calling the NC Program in a list and displays, for example, one or more NC programs in correlation with an FB for calling the NC program. The tool 10 may display one or more NC programs in correlation with an "FB for calling the NC program" and an "ID or the like of a user program in which the FB is described." When a user operation of selecting an arbitrary NC program in the IEC-NC program table is received, the tool 10 displays an editing screen of the NC program in another view.

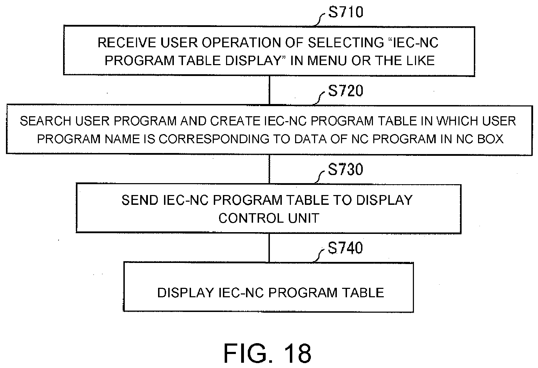

FIG. 18 is a flowchart illustrating an example of a process routine of t the "IEC-NC program table displaying function" performed by the tool 10. As illustrated in FIG. 18, when the operation receiving unit 110 receives a user operation of selecting "IEC-NC program table display" in menu or the like (S710), the display control unit 120 (particularly, the program separating unit 131) performs the following process. That is, the program separating unit 131 searches a user program 201 stored in the storage unit 200 and creates an IEC-NC program table 205 in which a user program name is correlated with data of an NC program in an "NC program editing area" such as an NC box (S720).

The program separating unit 131 sends the created IEC-NC program table 205 to the display control unit 120 (for example, the NC program editor unit 123) (S730). The display control unit 120 having acquired the IEC-NC program table 205 from the program separating unit 131 causes the display device 40 to display the acquired IEC-NC program table 205 (S740).

As described above in FIGs. 17 and 18, in the tool 10, the display control unit 120 may display (A) at least one of a program name and content of the NC program of the user program and (B) at least one of a program name of the user program or the sequence program and identification information of an FB that calls the NC program in correlation with each other.

According to this configuration, the tool 10 displays (A) at least one of a program name and content of the NC program of the user program and (B) at least one of a program name of the user program or the sequence program and identification information of an FB that calls the NC program in correlation with each other. Specifically, the tool 10 causes the display device 40 to display (A) at least one of a program name and content of the NC program of the user program and (B) at least one of a program name of the user program or the sequence program and identification information of an FB that calls the NC program in correlation with each other.

Accordingly, for example, even when a plurality of NC programs are scattered in a plurality of user programs, the tool 10 can enable a user to easily confirm the user programs or the sequence programs in which the plurality of NC programs are present.

### [Embodiment using software]

Control blocks (particularly, the operation receiving unit 110, the display control unit 120, the program processing unit 130, and the program transferring unit 140) of the tool 10 may be embodied by a logical circuit (hardware) which is formed in an integrated circuit (an IC chip) or may be embodied by software using a central processing unit (CPU).

In the latter, the tool 10 includes a CPU that execute commands of a program which is software for realizing the functions, a read only memory (ROM) or a storage device (which are referred to as a "recording medium") in which the program and various data are recorded in a computer (or CPU)-readable manner, and a random access memory (RAM) that loads the program. By causing the computer (or the CPU) to read and execute the program from the recording medium, the object of the disclosure is achieved. As the recording medium, a "non-transitory material medium" such as a tape, a disc, a card, a semiconductor memory, or a programmable logical circuit can be used. The program may be supplied to the computer via an arbitrary transmission medium (such as a communication network or a broadcast wave) that can transmit the program. The disclosure may be embodied in the form of a data signal which is embedded in carrier waves in which the program is embodied by electronic transmission.

### [Reference Signs List]

10 Tool (support device)
20 Controller (industrial control device)
110 Operation receiving unit (reception unit)
120 Display control unit
130 Program processing unit
140 Program transferring unit

## Claims

1. A support device (10) that supports creation of a user program which is executed by an industrial control device (20), the support device (10) comprising:
a reception unit (110) that receives a programming operation of a user, wherein the programming operation is associated with a sequence program and an NC program which are to be synchronously executed; and
a display control unit (120) that displays the sequence program and the NC program as the user program on a single screen in an editable manner in accordance with the programming operation received by the reception unit (110).

2. The support device (10) according to claim 1, further comprising a program processing unit (130), wherein when building the user program displayed by the display control unit (120), the program processing unit (130) unloads the NC program in the user program, and inserts a function block with an identifier corresponding to the unloaded NC program into a position at which the unloaded NC program was located in the user program, wherein the function block is a function block for calling the unloaded NC program.

3. The support device (10) according to claim 1 or 2, wherein the display control unit (120) displays the sequence program and the NC program with information for distinguishing the NC program from the sequence program on a single screen in an editable manner.

4. The support device (10) according to any one of claims 1 to 3, wherein the display control unit (120) displays an area in which the NC program is editable in the sequence program which is programmed by at least one of a ladder diagram and a function block diagram.

5. The support device (10) according to any one of claims 1 to 4, wherein the display control unit (120) displays pragmas indicating start and end of the NC program in the sequence program which is programmed by structured text and displays the NC program between the displayed pragmas indicating the start and the end in an editable manner.

6. The support device (10) according to any one of claims 1 to 5, wherein the display control unit (120) displays an action with an attribute indicating the NC program in the sequence program which is programmed by a sequential function chart in an editable manner, wherein the action comprises the NC program.

7. The support device (10) according to any one of claims 1 to 6, further comprising a program transferring unit (140) that transmits the sequence program and the NC program to a single industrial control device (20) that synchronously executes the sequence program and the NC program.

8. The support device (10) according to any one of claims 1 to 7, wherein the display control unit (120) displays the NC program of the user program in a list.

9. The support device (10) according to any one of claims 1 to 8, wherein the display control unit (120) enlarges and displays, in an editable manner, the NC program in the user program on a screen other than a screen on which the user program is displayed in an editable manner.

10. The support device (10) according to any one of claims 1 to 9, wherein the display control unit (120) displays at least one of a program name and content of the NC program in the user program, and at least one of a program name of the user program or the sequence program and identification information of a function block that calls the NC program in correlation with each other.

11. A control method of a support device (10) that supports creation of a user program which is executed by an industrial control device (20), the support method comprising:
a reception step of receiving a programming operation of a user, wherein the programming operation is associated with a sequence program and an NC program which are to be synchronously executed; and
a display control step of displaying the sequence program and the NC program as the user program on a single screen in an editable manner in accordance with the programming operation received in the reception step.

12. An information processing program causing a computer to serve as the support device (10) according to any one of claims 1 to 10, wherein the computer serves as each unit (110, 120, 130, 140).

13. A non-transitory computer-readable recording medium having the information processing program according to claim 12 recorded thereon.
